# EUROPEAN PATENT SPECIFICATION

(11) **EP 4 377 277 B1**
(45) Date of publication and mention of the grant of the patent: **02.07.2025**
(21) Application number: 22754397.2
(22) Date of filing: 22.07.2022
(51) Int. Cl.: C04B 20/02

(54) **SEPARATION OF HARDENED CONCRETE PASTE FROM AGGREGATE**
TRENNUNG VON GEHÄRTETER BETONPASTE VOM ZUSCHLAGSSTOFF
SÉPARATION DE LA PÂTE DE CIMENT DURCIE ET DES GRANULATS

(30) Priority: 29.07.2021 EP 21188485
(43) Date of publication of application: 05.06.2024
(73) Proprietor: Heidelberg Materials AG, 69120 Heidelberg (DE)
(72) Inventor: PATO, Nicolas, 69120 Heidelberg (DE); ZAJAC, Maciej, 69120 Heidelberg (DE); SKOCEK, Jan, 69120 Heidelberg (DE); WAGNER, Eckhard, 69120 Heidelberg (DE)
(74) Representative: Zellentin & Partner mbB Patentanwälte
(86) International application number: PCT/EP2022/070679
(87) International publication number: WO 2023/006623

(56) References cited:
- EP-A1- 3 744 700
- BRU KATHY ET AL: "Development of an innovative process for the up-cycling of concrete waste", 23 June 2017 (2017-06-23), XP055978714, Retrieved from the Internet <URL:https://core.ac.uk/download/pdf/84986440.pdf> [retrieved on 20221108]

## Description

The present invention relates to a method for separating hydrated concrete paste from aggregates, especially from the sand fractions and to a method for manufacturing supplementary cementitious material or filler or calcium carbonate cement from the carbonated recycled concrete paste obtained by the method for separation.

In view of the increasing amounts of concrete buildings being demolished and the need for more sustainable construction, recycling of waste and demolished concrete has gained more and more attention in the recent past. End-of-Life concrete contains cement hydrates which gave the concrete its strength and contain all the CaO the original clinker and cement contained. The technologies normally used to recycle concrete are operated in recycling sites, using standard crushing and sieving circuits. By using standard crushing technologies the coarse recycled aggregate fraction and especially the fine fraction below 4 mm, recovered as recycled sand, contain a significant amount of hydrated cement paste attached. This impairs and limits the application and usage of the coarse recycled aggregate and recycled sand in the production of fresh concrete. Further, a significant amount of recycled concrete paste cannot be recovered. It is also not straightforward to obtain a good quality product, i.e. useful as supplementary cementitious material.

Specific proposals to optimize recycled aggregate properties are found for example in US 2015/0210594 A1 and US 2016/0046532 A1. Both documents describe concurrent grinding and carbonation of coarse crushed concrete demolition waste to enhance separation of the hardened cement paste from the aggregate. Both mention the possibility to use exhaust gas as CO₂ source. However, the fine fraction containing the carbonated hardened cement paste is of very variable quality and not useful as supplementary cementitious material as a rule.

Other proposals like the following ones focus on using the carbonated recycled concrete fines. EP 3 498 681 A1 describes a method for manufacturing a supplementary cementitious material from recycled concrete fines by carbonation and de-agglomerating the carbonated material to form the supplementary cementitious material (abbreviated SCM). Although the document states that exhaust gas would be suitable as carbon dioxide, it needs either long exposure to obtain reactive SCM or concentrated carbon dioxide. WO 2019/115722 A1 proposes to combine exhaust gas cleaning from CO₂ in a stock pile or silo containing waste material rich in carbonatable Ca and/or Mg like recycled concrete fines with manufacturing of SCM from the waste material. This process achieves good CO₂ sequestration, but concurrent manufacturing of SCM takes long and optimal SCM reactivity is difficult to achieve without compromising CO₂ sequestration performance. Not prior published EP21163464.7 describes carbonation of the recycled concrete fines while applying centrifugal forces. EP 3 744 700 A1 combines grinding in a CO₂ containing atmosphere with a reactor for completing carbonation and CO₂ sequestration by recirculation of gas and solids between mill and reactor until the solids show a sufficient carbonation degree and/or the gas a low enough CO₂ level. JP H05 238790 A describes a carbonation of the fines from concrete recycling in an atmosphere of 30 to 900 °C and ≥ 5 Vol.-% CO₂ concentration. The fines are separated from the coarser fraction before carbonation. US 2,802,719 A relates to a preparation of completely carbonated calcium carbonate in a ball mill with carbon dioxide feed and a feed for pelletized water. It reports carbonation within a few minutes by simultaneous grinding, fluidizing, heating and reacting.

Further, proposals have been made to provide cements that harden by carbonation instead of hydration, see e.g. R.I. Khan et al., "Amino acids as performance-controlling additives in carbonation-activated cementitious materials", Cement and Concrete Research 147 (2021) 106501, or to use metastable calcium carbonate as calcium carbonate cement hardening by recrystallisation, see e.g. C.W. Hargis et al., "Calcium carbonate cement: a carbon capture, utilization, and storage (CCSU) technique" Materials 14 (2021) 2709.

Both, recycling waste concrete and cements hardening by reaction with CO₂, have high potential to sequester carbon dioxide. The recycling approach also renders waste concrete useful. However, this benefit is easily lost when the effort to provide recycled concrete paste as raw material becomes too high. Thus, it would be beneficial to have advanced recycling technologies for selective separation of concrete, i.e. extracting the cement hydrates, designated recycled concrete paste (RCP), from the aggregate. Then RCP can be used as a CO₂-free raw material for clinker production and as filler or SCM in cement and concrete etc. High quality recycled aggregates and sand would then be retrieved, making complete concrete recycling possible and closing the loop.

Thus, the object remains to provide more sustainable building materials. This mainly concerns saving natural resources like mineral raw materials and reducing energy consumption to decrease carbon dioxide emissions. Also, sequestration of carbon dioxide is a problem not really solved, yet.

It was now surprisingly found that treating crushed waste concrete by electrohydraulic fragmentation (abbreviated EHF) or electrodynamic fragmentation (abbreviated EDF) in the presence of carbon dioxide provides a fine fraction < 125 µm with a high calcium concentration. The whole treatment occurs in a wet process, therefore the possibility of combining EHF or EDF with carbonation entails a huge potential for a simultaneous RCP recovery and carbonation.

Current concrete recycling and separation techniques involve mainly mechanical crushing and or comminution and the related screening and classification steps. Alternative comminution techniques such as fragmentation by high voltage discharges, known as electric-pulse fragmentation (abbreviated EPF), applied to concrete recycling can provide alternative processes where higher selectivity is desired. The main advantage of EPF compared to mechanical comminution is its improved selectivity during the separation process, which can improve downstream process efficiency. On the other hand, high energy demand and wet conditions required by the processes are clearly drawbacks of this technologies in comparison to the standard techniques for concrete recycling.

Electric-pulse fragmentation covers high voltage pulse power processes like electrohydraulic fragmentation and electrodynamic fragmentation. Both are methods which gained more and more interest during the last three decades. Originally developed for mineral processing their potential for waste recycling has meanwhile been established. Further information can be found e.g. in H.R. Manouchehri and A. Weh, "High voltage electric pulse energy in comminuting - case study on sandvik's mittersile tungsten ore", 28th Int. Mineral Processing Congress Proc. ISBN 978-1-926872-29-2; K. Wielen et al., "High voltage breakage: a review of theory and applications", and A. Weh and A. Mosaddeghi, "Breakage characteristics of incinerator bottom ash in the HV pulse power process", both retrieved from http://www.selfrag.com/resources/publications; and K. Bru et al., "Development of an innovative process for the up-cycling of concrete waste", available at http://resolver.tudelft.nl/uuid:fdd20695-5bad-40a7-9763-1cb9874bfe96.

EPF techniques involve generating highly energetic electrical pulses (150 - 750 J/pulse) with a very fast voltage ramp-up time (< 500 nsec.) and applying them to materials immersed in a process liquid. Dielectric liquids such as water are more resistive than solids when the pulse rise time is kept below 500 nsec. forcing discharges through the immersed material (see H. Bluhm et al., "Application of Pulsed HV Discharges to Material Fragmentation and Recycling", IEEE Trans. Dielectr. Electr. Insul. 2000, 7, 625 - 636). The plasma channel formed during the discharge causes explosive expansion along the discharge pathway (electrodynamic fragmentation - EDF), and the collapse of the plasma channel produces a shock-wave that propagates through the material (electrohydraulic fragmentation - EHF). The high selectivity of the process arises from the way the electricity and shockwaves interact with physico-chemical properties of the material. Discontinuities in electrical permittivity and conductivity at phase boundaries locally enhance the electric field forcing the discharge channels to these boundaries. The combination of the shock wave with acoustic discontinuities concentrates tensile stress at phase interfaces (see U. Andres et al., "Liberation of minerals by high-voltage electrical pulses", Powder Technol. 104, 1999, 37 - 49; HISER, 2016). The concentration of energy and stress at phase boundaries causes selective breakage, and allows full liberation of components from the feed material.

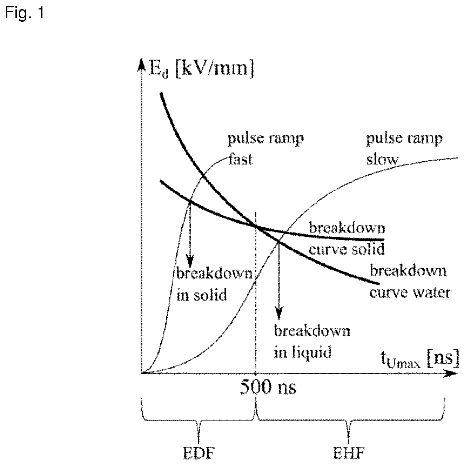

The difference between EDF and EHF is illustrated in Figure 1 identifying EDF to occur with shorter pulses below approximately 500 nsec., where the dielectric strength (Ed) of the solid sample material is found to be below the one of water. Applying a high enough voltage (Umax) within a sufficiently low pulse rise time of tUmax < 500 nsec. hence allows the subsequent discharge to penetrate through a solid material sample within the process water.

While using EPF is able to provide good quality coarse aggregate it remains difficult to recycle the sand fraction and the RCP emerges as suspension of partly very fine particles. Only by combining EPF with carbonation according to the present invention is a high quality carbonated RCP obtained that can be retrieved efficiently from the suspension and is directly suitable as filler and SCM.

Thus, the above object is achieved by a method for manufacturing carbonated recycled concrete paste and clean aggregate comprising the following steps:
- providing a feedstock comprising waste concrete with a D₁₀ ≥ 0.1 mm and a D₉₀ ≤ 100 mm,
- passing the feedstock, a water containing liquid and carbon dioxide in an amount providing a concentration of at least 0.1 wt.-% carbon dioxide in the liquid into a fragmentation vessel, where the wet feedstock is subjected to electric-pulse fragmentation,
- withdrawing a fragmented solid material from the fragmentation vessel,
- separating the fragmented solid material from admixed liquid phase,
- recirculating the liquid phase into the fragmentation vessel,
- separating the fragmented solid material into a fine fraction with a maximum particle size of 250 µm to provide carbonated recycled concrete paste and a coarse fraction,
- recycling the coarse fraction into the fragmentation vessel and/or discharging the coarse fraction as clean aggregate.
The problem is also solved by a method for manufacturing a supplementary cementitious material or filler by providing the carbonated recycled concrete paste by the method for manufacturing carbonated recycled concrete paste and clean aggregate and mixing the carbonated recycled concrete paste with an hydraulic cement, as well as by a method for manufacturing calcium carbonate cement by providing carbonated recycled concrete paste through the method for manufacturing carbonated recycled concrete paste and clean aggregate.

Thereby, the present invention presents an alternative solution to prior proposals relying on mechanical comminution or other attrition forces acting on the outside of the particles having waste concrete adhered to aggregate in the presence of carbon dioxide or relying only on EPF acting on the boundary between aggregate and RCP inside the particles., by using electric-pulse fragmentation combined with carbonation to separate waste concrete, especially the fraction < 32 mm, into clean aggregate and high quality carbonated recycled concrete paste (abbreviated cRCP). Such cRCP is substantially pure, i.e. comprises (almost) only the products of RCP carbonation. This renders it very suitable for the production of new low CO₂-cements in various functions, especially as filler, SCM and calcium carbonate cement.

To simplify the description the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement designates a material that, after mixing with an aqueous liquid to form a paste, is able to develop mechanical strength by hydraulic reaction (then it is a hydraulic cement) or by dissolution-precipitation. Thus, cement mostly denotes a clinker ground with or without further components, but also mixtures like super sulphated cement, geopolymer binder, and hydraulic materials not obtained by sintering like a dicalcium silicate obtained by hydrothermal treatment. Composite cement or binder mixture means a mixture containing an hydraulic cement and a supplementary cementitious material. A cement, composite cement or binder is usually used adding water or another liquid and mostly also aggregate. Typically, admixtures and/or additives are added to the binder and/or the paste.

A supplementary cementitious material is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

Calcium carbonate filler, although not pozzolanic or latent hydraulic on its own, shows a synergistic effect with alumina rich SCMs and clinker phases and is hence often used in combination with SCMs. Generally, it is used as a filler in cements, optimizing strength and water demand by adding particles with sizes not covered by the other components.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g. a pre-cast concrete element or a floor or a bridge part from cast in place concrete.

According to the invention, waste concrete is converted into cRCP and clean aggregate by a particularly efficient separation of RCP from aggregate achieved by the combination of EPF and carbonation.

The method according to the invention relies on crushed waste concrete obtained as known per se as feedstock. Waste concrete covers all materials that occur in the use of cement, binder and hydraulically hardening building materials. One typical example is concrete demolition waste. Further examples are remains from hydraulically hardening building materials, like concrete and mortar prepared and then superfluous, and solid parts in the waste water from cleaning devices for concreting, like concrete trucks, mortar mixers, and moulds for precast concrete parts. It is contemplated that other waste materials of similar composition as waste concrete, i.e. rich in carbonatable Ca and/or Mg phases, e.g. bottom ashes, fly ashes, slags and mixtures thereof, can be carbonated to provide highly reactive SCM in the same way as waste concrete or supplement waste concrete in the feedstock. Rich in carbonatable Ca and/or Mg phases means that at least 12.5 wt.-% of the waste material calculated as oxides is CaO and/or MgO and at least 80 wt.-% of the CaO and MgO is in carbonatable phases before carbonation. Preferably, CaO and/or MgO constitute at least 20 wt.-%, more preferably at least 30 wt.-% and most preferred at least 50 wt.-% of the waste material. Preferably, at least 85 wt.-%, more preferably at least 90 wt.-% of the CaO and MgO are in carbonatable phases. Thus, while a part of the carbonatable CaO and MgO in the waste material might be already carbonated before carbonation, at least 10 wt.-% of the material calculated as oxides is carbonatable but not yet carbonated CaO and/or MgO.

A preferred waste concrete is concrete demolition waste. Concrete demolition waste designates the crushed material obtained during demolition of concrete containing structures like buildings and road surfaces from which the foreign materials like wood, metal parts, brick parts, and plastic, have been substantially completely removed. According to the invention, the fraction with D₁₀ ≥ 0.1 mm, preferably D₁₀ ≥ 1 mm, most preferred D₁₀ ≥ 2 mm, and D₉₀ ≤ 100 mm, preferably D₉₀ ≤ 50 mm, most preferred D₉₀ ≤ 32 mm, resulting from concrete demolishing is particularly useful as feedstock.

In one embodiment the fine fraction is used. Recycled concrete fines (abbreviated RCF) designates the material obtained after crushing concrete demolition waste and separating the particles reusable as coarse aggregate (e.g. D₉₀ ≥ 4 mm or ≥ 8 mm or ≥ 16 mm and usually designated recycled aggregate) and, if applicable, any foreign matter contained. The exact composition and particle size distribution of the concrete fines depends on the original binder and composition used in the concrete and on the demolishing and grinding procedures applied. Usually, the original aggregate is separated as much as possible and the RCF contain mostly the ground hardened binder paste together with fine sand/aggregates. Usually RCP is present in amounts of 30 to 80 wt.-% of the total RCF weight.

In a further embodiment, a coarse fraction, recycled aggregate (abbreviated RCA), is used as feedstock. In this embodiment the D₁₀ is preferably ≥ 2 mm. RCA is typically composed of coarse aggregate with adhering RCP and agglomerates of aggregate adhered together by RCP. Thus, the coarse fraction obtained as product still contains fine recycled aggregate, designated recycled sand (abbreviated RS). Therefore, in one embodiment the coarse fraction is separated into clean coarse aggregate and RS to allow separate use.

Another preferred waste concrete is concrete residues arising during building, e.g. but not limited to unused ready mix concrete and left over mortar. The residues are crushed - optionally ground - to provide the feedstock according to the invention with particle sizes as described for concrete demolition waste. Also cement that has been stored too long and partially hydrated is useful, if needed after analogous crushing and/or grinding. Further, the waste arising during cleaning of devices used in concreting, e.g. molds for manufacturing pre-cast concrete elements, especially the filter cake from pre-cast plants, is suitable, if needed after crushing and/or grinding to particle sizes as described before and/or removal of (part of) the water.

The feedstock can be provided from one waste concrete or by mixing and/or co-grinding or co-crushing several waste concrete materials as well as other materials rich in carbonatable Ca and/or Mg phases. Typically, it is easier to use only one source, but using two or more allows optimization of the composition and converting otherwise unsuitable materials, i.e. ones that could not be used on their own. In one embodiment the starting material consists of one waste concrete or of a mixture of two or more waste concretes.

The feedstock is preferably obtained in a primary or secondary crushing of waste concrete, especially by technologies that minimize the production of fine fractions. Thus, suitable devices are for example, but not limited to, vertical shaft impactor (VSI) crushers, vibrating cone crushers e.g. Rhodax 4D^{®}, standard cone crushers, vertical roller mills (VRM), high pressure grinding rollers (HPGR) or Smart Crusher^{®} technologies.

The particle size of the feedstock is not critical, however, as finer materials are usually carbonated faster a D₉₀ of ≤ 50 mm, preferably ≤ 32 mm, in some embodiments even ≤ 16 mm or ≤ 8 mm or ≤ 4 mm, is typically desired. On the other hand, EPF is more effective on larger particles, so that a D₁₀ ≥ 0.1 mm, preferably ≥ 1 mm or ≥ 2 mm, in some embodiments even ≥ 4 mm or ≥ 8 mm or ≥ 16 mm, is usually adjusted. If the feedstock has not the desired particle size distribution (abbreviated PSD), it can be easily adjusted with methods and devices known per se, like grinding, sieving, or classifying.

Particle size distribution is measured by sieving for sizes above 2 mm herein and determined by laser granulometry for sizes below 1 mm. In the 1 - 2 mm range the method is chosen depending on the particle size range of the material. For ranges extending mainly above 1 mm sieving is commonly applied, for ranges extending mainly below 1 mm laser granulometry is typically better.

The method according to the invention is especially suitable for the valorization of the fraction below 4 mm which was subjected to at least one previous mechanical treatment and where a selective separation of the RCP did not occur efficiently. It is likewise suitable to separate RCP from coarse aggregate, i.e. valorization of the fraction above 4 mm or above 8 mm. However, the method according to the invention also works well with a feedstock having a broad particle size distribution with a D₁₀ of about 0.1 mm and a D₉₀ of about 100 mm.

It is possible to include additional material into the feedstock that accelerates the carbonation process and/or improves the final properties of the cRCP or of the cement containing it or a building material made with it. This also applies to the embodiment where the feedstock consists of one or more waste concrete(s).

Typically, additional material will be included in an amount from 0.001 to 1 wt.-% with respect to the total feedstock. Usually, substances that improve the properties of the cement or hydraulic building material made with the cRCP are added to the cement or building material, but some can also accelerate the carbonation. In the latter case their addition to the feedstock is advantageous. Preferably, substances for enhancing the carbonating process or mixtures of two or more thereof are used as additional material.

Suitable materials include amines like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof, halogenides, ethylenediaminetetraacetic acid (EDTA) or other substances that improve dissolution of CO₂ in the solution. Additionally enzymes such as carbonic anhydrase can be used to enhance carbonation efficiency and modify the properties of the reaction products. Also amino acids, e.g. aspartic acid, serine, arginine, as well as ammonium salts, e.g. ammonium chloride, ammonium sulfate and ammonium nitrate, are useful, especially to provide the calcium carbonate component of the cRCP in a metastable form. Such forms show e.g. a reactivity as calcium carbonate cement not found in calcite. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar water soluble substances.

It is also possible to add substances providing alkali metal ions so that sulfate ions present are kept in the liquid as alkali sulfate as described in not prior published EP 21185792.5, the content of which is incorporated herein in its entirety.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinylsulfonic acids, styrenesulfonate, citric acid and other organic acids, polysaccharides and phosphonates, polycarboxylates.

Furthermore, it is possible to add admixtures that modify properties of the hydraulic building material or the building structure made from the composite cement comprising the SCM according to the invention already to the starting material (usually those will be added to the building material or cement).

Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g. surface active substances, especially ones based on soaps from natural resins or synthetic nonionic and ionic tensides.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides).

It is also possible to add admixtures that are designed to modify the rheology properties, i.e. rheology modifiers like e.g. polycarboxylates, lignosulfonates, starch, Karoo gum, bentonite clay, polyvinyl alcohol, and mixtures thereof.

All admixtures are used in the amounts known as such, wherein the amount is adapted to a specific binder and special needs in the known manner.

Additives can be added as well to the starting material, but usually those are added to the composite cement or the hydraulic building material. Usual and useful additives are e.g. fillers (especially limestone and other stone dust), pigments, reinforcing elements, self-healing agents etc. All these can be added in the amounts known per se.

Separation of RCP from aggregate takes place in a fragmentation vessel by the combined action of EPF and carbonation. For this, the feedstock is introduced into the vessel together with a water containing liquid phase and carbon dioxide. In a preferred embodiment the liquid phase is only water, but other liquid components are possible. Preferably, the feedstock is introduced continuously to an electric-pulse fragmentation reactor, together with the liquid phase and carbon dioxide.

All or part of the liquid phase, especially the water, can also be provided as part of the feedstock, i.e. already mixed with it. For example, the waste concrete or a part thereof can be in the form of a suspension or water has been added in prior steps. It is also possible that a feedstock contains more liquid or water than desired, in that case the feedstock is concentrated before introduction into the fragmentation vessel.

The carbon dioxide for use in the method according to the invention can be introduced in gaseous, liquid, solid or supercritical form. Gaseous CO₂ used for the carbonation can be used in pure form or in the form of mixtures with other gases, such as air, oxygen, nitrogen or argon. Preferred are carbon dioxidecomprising gas mixtures available on an industrial scale.

One especially preferred source of CO₂ is exhaust gas, preferably exhaust gas having a high CO₂ content like from 10 to 30 Vol.-% or higher, based on the total volume of the exhaust gas. Particularly preferred are exhaust gases from cement or lime plants, coal or gas fired power plants, and waste incinerators.

The CO₂ concentration is not restricted, preferably it ranges from 1 to 100 Vol.-%, more preferred from 2 to 95 Vol.-%, and most preferred from 5 to 90 Vol.-%.

In one preferred embodiment a carbon dioxide solution is used. In this case it is advantageous to use the CO₂ solution at least partly as the liquid introduced into the fragmentation vessel. Most preferred an aqueous carbon dioxide solution is used. The CO₂ solution can preferably be obtained by absorbing CO₂ from exhaust gases into an aqueous liquid.

Usually, a CO₂ concentration in the liquid inside the vessel ranging from 0.1 to 20 wt.-%, preferably from 0.5 to 10 wt.-%, most preferred from 1 to 5 wt.-%, is suitable. If a solution with high carbon dioxide concentration is used to provide carbon dioxide, additional water may be added to obtain the desired concentration. All introduced water is preferably water recycled within the method according to the invention. If a combination of gaseous and dissolved carbon dioxide is used for carbonation, the concentration of CO₂ in the solution can be lower, e.g. down to 0.00001 wt.-% carbon dioxide or ≥ 0.0001 wt.-%, or ≥ 0.001 wt.-%, or ≥ 0.01 wt.-%. The concentration of carbon dioxide inside the vessel can also be easily increased by adding dry ice, i.e. solid carbon dioxide, when needed. Solid carbon dioxide can also be used alone as carbon dioxide. In a preferred embodiment the water inside the fragmentation vessel is saturated with CO₂.

The fragmentation vessel can operate at room temperature, but also between 30 and 95 °C. In one embodiment a temperature of ≥ 40 °C is used, which was found to be advantageous for the formation of metastable amorphous calcium carbonate.

The carbonation preferably takes place at atmospheric pressure, but the vessel can also be operated under vacuum or at an overpressure, e.g. at an absolute pressure of up to 5 bar, or up to 3 bar or up to 1.5 bar.

High voltage pulses are applied to the liquid phase inside the vessel and cause fragmentation of the feedstock. Concurrent, wet carbonation of the RCP synergistically promotes detachment of RCP from the aggregate. Unlike mechanical attrition forces EPF leaves the aggregate itself not or only scarcely fragmented. The intensity and number of discharges are adjusted to steer the selectivity of the process. High energy/intensity pulsation promotes selectivity allowing a reduction in the number of pulses/cycles, while the effect of removing the liberated fines is maintained. Suitable voltages range from at least 20 kV to 50 kV for electro-hydraulic crushing or more than 90 kV for electro-dynamic fragmentation. According to the invention from 30 to 200 kV are preferred. Rise times can range from 0.1 to 5 µsec., preferably rise times of < 2 µsec. are used. Devices suitable for EPF are known as such. Continuously operating devices are preferred.

As product of the combined carbonation and EPF a liquid phase containing a fragmented solid material is obtained. The solid material is withdrawn from the fragmentation vessel either together with the liquid phase or as far as possible separately from the liquid phase. The solid material is separated from such liquid phase still admixed with or adhering to it, for example by filtration or decanting or pressing. It is an advantage of the combined carbonation and electric-pulse fragmentation that the solid material is mainly aggregate and calcium carbonate, both of which are not soluble and settle to the bottom of the liquid phase. There, the solid material can be withdrawn from the vessel with very little liquid.

The liquid phase withdrawn together with the solid material is preferably recycled into the fragmentation vessel. Liquid phase can also be withdrawn from the vessel at a different point than that where the solid material is withdrawn. For such withdrawn liquid phase it is also preferred to recycle it. For recycling the liquid phase can be passed back directly into the vessel and/or used in preparation steps of the feedstock. Withdrawn liquid phase can also be partly or completely discharged or used elsewhere, e.g. but not limited to as mixing water for concrete.

The solid material is divided into at least two fractions according to particle size, e.g. by sieving or classifying, with a cut-off size of 250 µm, preferably 150 µm, more preferred 125 µm, most preferred 90 µm, to obtain the carbonated recycled concrete paste as the fine fraction and a coarse fraction containing the aggregate. Preferably, the solid material is sieved to provide the carbonated RCP as the fraction with particles smaller than 250 µm or 150 µm or 125 µm or 90 µm. The fraction with coarser particle size comprises sand and coarser aggregate as well as possibly feedstock not completely fragmented. Depending on whether the amount of not yet fragmented feedstock is acceptable or too high, the coarse fraction is recycled into the fragmentation vessel or discharged from the process as clean aggregate.

In case RCP remains only on a part of the aggregate separable via particle size, it is preferred to further separate the fraction with coarser particle size according to this size. The clean aggregate is then discharged and the material with RCP adhering to aggregate recycled into the process.

The fraction recovered with a particle size < 250 µm, preferably < 125 µm, can be used for further processing as constituent in raw meal preparation for clinker production or as a filler in cement products. Alternatively, when due to the conditions during subjecting the wet feedstock to EPF cRCP with high carbonation degree is recovered as fine fraction it can be used directly as SCM replacing clinker in cement production. In a preferred embodiment, carbon dioxide concentration and treatment time for EPF are adjusted to ensure the desired carbonation degree, preferably also one or more other parameters like temperature, pulse intensity, pressure and/or particle size in the wet feedstock are chosen and set to optimize, i.e. enhance, carbonation. RS (aggregate with sizes from 0.125 or 0.250 mm - 2 or 4 mm) and RA (aggregate with sizes > 2 or > 4 mm) are recovered clean enough to be used in the formulation of new concrete

The carbonated RCP according to the invention is especially useful as filler and/or SCM in composite cements. The very efficient detaching of RCP from aggregate achieved by the EPF acting directly at the boundary between aggregate and RCP in combination with carbonation results in a fine product usually having a high carbonation degree of the cRCP of at least 50 wt.-%, often at least 65 wt.-%, even at least 80 wt.-%, of the CaO and MgO being carbonated, i.e. obtained in the form of a calcium or magnesium carbonate or hydrogen carbonate or other carbonate compound. Such cRCP is considered an SCM herein. In contrast, a "simple" subjecting to abrasive forces in the presence of carbon dioxide, even high amounts of CO₂, is not able to achieve enough carbonation for use as SCM within useful treatment times. It takes too long until the RCP is detached and available for carbonation. For manufacturing composite cements the carbonated RCP obtained by the method according to the invention is mixed with an hydraulic cement. In case cRCP is not sufficiently carbonated for use as SCM, e.g. due to very low CO₂ concentrations or short treatment times, it can still be used as filler to replace mineral fillers like limestone, and, thus, is a valuable material. The carbonated RCP behaves substantially as filler when the carbonation degree is up to 40 wt.-% or up to 30 wt.-%. Also, a use as component of cement raw meal is possible and preferred at very low carbonation degrees like up to 20 wt.-% or up to 10 wt.-%.

Hydraulic cements suitable for the use of the carbonated recycled concrete paste to make composite cements are for example, but not limited to, Portland cement, Portland composite cement, calcium sulfoaluminate cement, calcium aluminate cement and dicalcium silicate cement. Preferred hydraulic cements are Portland cements according to DIN EN 197-1, calcium sulfoaluminate cement and calcium aluminate cement. Especially preferred are Portland cements according to DIN EN 197-1.

Typically, the composite cement obtained from blending a carbonated RCP according to the invention as SCM with a hydraulic cement comprises from 5 to 95 wt.-% cement and from 95 to 5 wt.-% SCM. Preferably, it contains from 30 to 90 wt.-% cement and from 70 to 10 wt.-% SCM, more preferred from 50 to 80 wt.-% cement and from 50 to 20 wt.-% SCM.

For use as filler the amount of carbonated RCP according to the invention ranges from 1 to 60 wt.-%, preferably from 5 to 40 wt.-%, most preferred from 10 to 20 wt.-%.

In addition, usual admixtures and/or additives as described above for adding to the feedstock can be added to the composite cement. The composite cement can also comprise one or more other SCM, i.e. the composite cement can be a ternary, quaternary, ... blend. Suitable other SCM are e.g. but not limited to fly ash, ground granulated blast furnace slag, and calcined clay. Naturally, the amounts of all components in a specific composite cement add up to 100 %, so if SCM and hydraulic cement are the sole components their amounts add up to 100 %, when there are other components, the amount of SCM and hydraulic cement is less than 100 %.

For use, the composite cement is transformed into a hydraulic building material, e.g. into mortar or concrete, by mixing with water. Typically, a water to binder weight ratio (w/b) from 0.1 to 1, preferably from 0.15 to 0.75, and more preferred from 0.35 to 0.65 is used. The carbonated RCP according to the invention as SCM - and if applicable one or more further SCMs that are optionally added - are included into the amount of binder for calculating the w/b ratio. The mortar or concrete usually also contains aggregates as well as optionally admixtures and/or additives. Admixtures and additives have been described before.

The composite cements obtained according to the invention are useful for all applications where ordinary Portland cement and known composite cements are used, especially concrete, mortar, and construction chemical products such as screed, tile adhesive etc.

Usually, aggregate and admixtures are added when making a hydraulically hardening building material like concrete or mortar from the composite cement. The known aggregate and usual admixtures are used in the usual amounts. For construction chemical products like floor screed or tile adhesive any necessary aggregate and admixture is typically added to the composite cement to form a dry mix, as far as possible. The aggregate and admixture are chosen depending on use in a manner well known per se.

A calcium carbonate cement is manufactured according to the invention by providing the carbonated recycled concrete paste through the separation method according to the invention. It hardens by a dissolution-precipitation reaction and can reach compressive strengths of at least 40 MPa as reported by C.W. Hargis et al., "Calcium carbonate cement: a carbon capture, utilization, and storage (CCSU) technique", mentioned before.

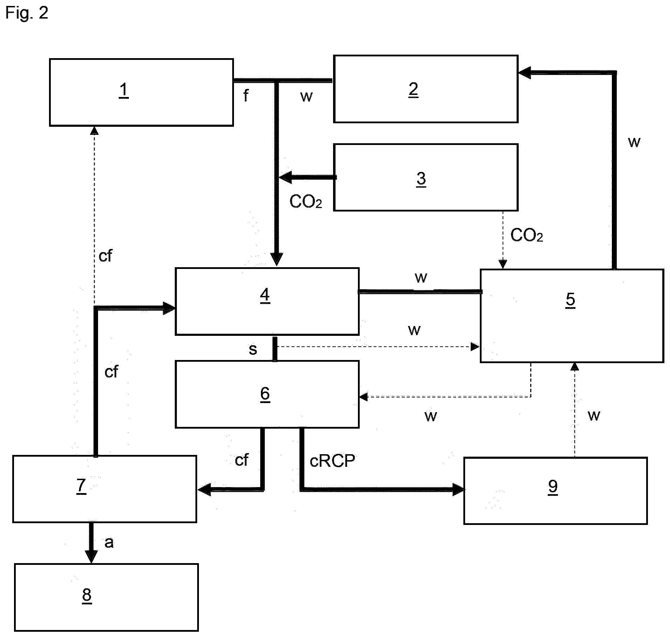

The invention will be illustrated further with reference to the attached figure 2, without restricting the scope to the specific embodiment described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In figure 2 a preferred mode for carrying out the method according to the invention is illustrated. Waste concrete in a stock 1 is introduced together with water (or a liquid containing water) from a tank 2 and carbon dioxide from a source like a gas supply means 3 (or an exhaust gas line) to a fragmentation vessel 4.

Inside the vessel, the liquid phase is subjected to high voltage discharge pulses applied by a generator not shown. Typically, the liquid phase flows through the vessel allowing a continuous process. However, the fragmentation vessel can also be operated in batch mode. In that case several vessels can be operated in parallel to obtain a quasi-continuous process.

In the embodiment shown in figure 2 most of the water is withdrawn separately from the wet solid material. The water is passed into a treatment device 5. Therein, carbon dioxide can be added if desired. Possibly present solid material can be separated from the water if needed, and e.g. passed to a sieving device. Treated water is then recirculated into the tank 2 and thus recycled.

The solid material, optionally after further separation from water which is passed into the treatment device 5, is fed to a sieving device 6. Therein, it is divided into a fine fraction with particle sizes < 125 µm consisting essentially of carbonated recycled concrete paste, and a coarser fraction comprising clean aggregate and possibly aggregate still bearing some hardened concrete paste. If water separates from the solids in the sieving device or in later steps it can be passed into the treatment device 5.

For a continuous process a separator 7 is used, which divides the coarser fraction into clean aggregate and solid material needing further fragmentation. The latter is recycled into the fragmentation vessel 4. The clean aggregate is discharged to a silo or other storage device or direct use designated 8. The clean aggregate can also be split into several fractions with different sizes.

The carbonated recycled concrete paste is also discharged to a silo or other storage device or direct use designated 9. If applicable, still present water is passed from the storage of the cRCP into the water treatment device.

The recirculated process liquid may contain (unreacted) CO₂ in solution and can be recirculated back to the treatment vessel. The recirculation may include reconditioning the input of fresh CO₂ in order to adjust its concentration/saturation within the process liquid.

### list of reference numbers

- 1: stock of feedstock
- 2: tank for liquid, especially water
- 3: carbon dioxide source
- 4: fragmentation vessel
- 5: treatment device
- 6: sieving device
- 7: separator
- 8: silo, storage device, use
- 9: silo, storage device, use

- a: clean aggregate
- cf: coarse fraction
- CO₂: carbon dioxide
- cRCP: carbonated recycled concrete paste
- f: feedstock
- s: fragmented solid material
- w: liquid, especially water

## Claims

1. Method for manufacturing carbonated recycled concrete paste and clean aggregate comprising the following steps:
- providing a feedstock comprising waste concrete with a D₁₀ ≥ 0.1 mm and a D₉₀ ≤ 100 mm
- passing the feedstock, a water containing liquid and carbon dioxide in an amount providing a concentration of at least 0.1 wt.-% carbon dioxide in the liquid into a fragmentation vessel, where the wet feedstock is subjected to electric-pulse fragmentation,
- withdrawing fragmented solid material from the fragmentation vessel,
- separating the fragmented solid material from admixed liquid phase,
- separating the fragmented solid material into a fine fraction with a maximum particle size of 250 µm to provide the carbonated recycled concrete paste and a coarse fraction,
- recycling the coarse fraction into the fragmentation vessel and/or discharging the coarse fraction as clean aggregate.

2. Method according to claim 1, wherein concrete demolition waste, concrete residues arising during building, cement partially hardened during too long storage, waste arising during cleaning of devices used in concreting, or mixtures of two or more thereof are used as the waste concrete, preferably wherein the feedstock consists of one or more waste concrete(s).

3. Method according to claim 1 or 2, wherein the feedstock is obtained in a primary or secondary crushing of waste concrete, preferably by technologies that minimize the production of fine fractions and/or with a particle size distribution having a D₉₀ of ≤ 50 mm, preferably ≤ 32 mm, and/or a D₁₀ ≥ 1 mm, preferably ≥ 2 mm, determined with sieving.

4. Method according to one of claims 1 to 3, wherein the feedstock includes additional material that accelerates the carbonation process and/or improves the final properties of the carbonated recycled concrete paste or the cement made with it or a building material made with the cement, preferably also where the feedstock consists of one or more waste concrete(s).

5. Method according to one of claims 1 to 4, wherein the additional material is one or more of alkanolamines, halogenides, substances that improve dissolution of CO₂ in the solution, enzymes, amino acids, ammonium salts, substances that regulate the pH during the carbonation, substances providing alkali metal ions, magnesium salts, polyacrylic acid, polyacrylamide, polyvinyl alcohol, polyvinylsulfonic acids, styrenesulfonate, organic acids, polysaccharides, phosphonates, polycarboxylates, water reducing agents, plasticizers, air entraining agents, retarders, rheology modifiers, fillers, pigments, reinforcing elements, self-healing agents, and mixtures of two or more thereof.

6. Method according to one of claims 1 to 5, wherein the liquid phase is water and/or is provided as part of the feedstock and/or liquid phase separated from the solid material is recirculated to the vessel.

7. Method according to one of claims 1 to 6, wherein exhaust gas is used as the carbon dioxide, preferably exhaust gas from cement plants, lime plants, coal fired power plants, gas fired power plants, waste incinerators, or a mixture of such exhaust gases.

8. Method according to one of claims 1 to 6, wherein a carbon dioxide solution is used as carbon dioxide, preferably a solution of carbon dioxide in the liquid phase or constituting a part of the liquid phase.

9. Method according to one of claims 1 to 8, wherein the concentration of carbon dioxide in the liquid inside the vessel ranges from 0.1 to 20 wt.-%, preferably from 0.5 to 10 wt.-%, more preferred from 1 to 5 wt.-%, most preferred the liquid phase is water and is saturated with CO₂.

10. Method according to one of claims 1 to 9, wherein the temperature is set to range from 30 to 95 °C, preferably to 40 to 95 °C.

11. Method according to one of claims 1 to 10, wherein electric pulses during electric-pulse fragmentation have a rise time of ≤ 1 µsec. and/or a voltage of ≥ 90 kV.

12. Method according to one of claims 1 to 11, wherein the fragmented solid material is separated from the liquid phase by filtration or decanting, preferably by filtration.

13. Method according to one of claims 1 to 12, wherein the withdrawn liquid phase from which the solid material has been separated is recycled into the reaction vessel, optionally after increasing its carbon dioxide concentration.

14. Method for manufacturing a composite cement comprising providing carbonated recycled concrete paste by a method according to one of claims 1 to 13 and mixing the carbonated recycled concrete paste with an hydraulic cement.

15. Method according to claim 14, wherein the composite cement comprises the carbonated recycled concrete paste as supplementary cementitious material and comprises from 95 to 5 wt.-% carbonated recycled concrete paste, preferably from 70 to 10 wt.-% carbonated recycled concrete paste, most preferred from 50 to 20 wt.-% carbonated recycled concrete paste; or wherein the composite cement comprises the carbonated recycled concrete paste as filler and comprises from 1 to 60 wt.-% carbonated recycled concrete paste, preferably from 5 to 40 wt.-% carbonated recycled concrete paste, most preferred from 10 to 20 wt.-% carbonated recycled concrete paste.

16. Method according to claim 14 or 15, wherein the hydraulic cement is Portland cement, Portland composite cement, calcium sulfoaluminate cement, calcium aluminate cement and/or dicalcium silicate cement, preferably a Portland cement according to DIN EN 197-1, calcium sulfoaluminate cement or calcium aluminate cement, especially preferred a Portland cement according to DIN EN 197-1.

17. Method according to one of claims 14 to 16, wherein during subjecting the wet feedstock to electric pulse fragmentation the concentration of carbon dioxide and treatment time are adjusted to provide the carbonated recycled concrete paste with a carbonation degree of at least 50 wt.-%.

18. Method for manufacturing a calcium carbonate cement comprising providing carbonated recycled concrete paste by a method according to one of claims 1 to 13, wherein during subjecting the wet feedstock to electric pulse fragmentation the concentration of carbon dioxide and treatment time are adjusted to provide the carbonated recycled concrete paste with a carbonation degree of at least 50 wt.-%.

## Patentansprüche

1. Verfahren zur Herstellung von karbonatisiertem Recyclingzementstein und sauberer Gesteinskörnung, umfassend die folgenden Schritte:
- Bereitstellen eines Ausgangsmaterials umfassend Betonabfall mit einem D₁₀ ≥ 0,1 mm und einem D₉₀ ≤ 100 mm
- Einbringen von Ausgangsmaterial, einer wasserhaltigen Flüssigkeit und Kohlendioxid in einer Menge, die eine Konzentration von mindestens 0,1 Gew.-% Kohlendioxid in der Flüssigkeit bereitstellt, in einen Fragmentierungsbehälter, worin das nasse Ausgangsmaterial einer Elektroimpuls-Fragmentierung unterzogen wird,
- Entnahme des fragmentierten festen Materials aus dem Fragmentierungsbehälter,
- Trennung des fragmentierten festen Materials von der beigemischten flüssigen Phase,
- Trennung des fragmentierten festen Materials in eine Feinfraktion mit einer maximalen Teilchengröße von 250 µm, um den karbonatisierten Recyclingzementstein bereitzustellen, und eine Grobfraktion
- Rückführung der Grobfraktion in den Fragmentierungsbehälter und/oder Austragung der Grobfraktion als saubere Gesteinskörnung.

2. Verfahren gemäß Anspruch 1, wobei als Betonabfall Betonabbruchabfall; Betonreste, die beim Bauen anfallen; Zement, der teilweise bei zu langer Lagerung ausgehärtet ist; Abfall, der bei der Reinigung von beim Betonieren verwendeten Vorrichtungen anfällt; oder Gemische aus zwei oder mehreren davon verwendet werden, wobei das Ausgangsmaterial bevorzugt aus einem Betonabfall oder mehreren Betonabfällen besteht.

3. Verfahren gemäß Anspruch 1 oder 2, wobei das Ausgangsmaterial in einer Primär- oder Sekundärzerkleinerung von Betonabfall gewonnen wird, bevorzugt durch Techniken, welche die Produktion von Feinfraktionen minimieren, und/oder mit einer Korngrößenverteilung mit einem D₉₀ von ≤ 50 mm, bevorzugt ≤ 32 mm, und/oder einem D₁₀ ≥ 1 mm, bevorzugt ≥ 2 mm, bestimmt durch Sieben.

4. Verfahren gemäß einem der Ansprüche 1 bis 3, wobei das Ausgangsmaterial zusätzliches Material enthält, das den Karbonatisierungsprozess beschleunigt und/oder die Endeigenschaften des karbonatisierten Recyclingzementsteins oder des damit hergestellten Zements oder eines mit dem Zement hergestellten Baumaterials verbessert, wobei bevorzugt auch das Ausgangsmaterial aus einem Betonabfall oder mehreren Betonabfällen besteht.

5. Verfahren gemäß einem der Ansprüche 1 bis 4, wobei das zusätzliche Material eines oder mehrere von Alkanolaminen; Halogeniden; Substanzen, die die Löslichkeit von CO₂ in der Lösung verbessern; Enzymen; Aminosäuren; Ammoniumsalzen; Substanzen, die den pH-Wert während der Karbonatisierung regulieren; Substanzen, die Alkalimetallionen bereitstellen; Magnesiumsalzen; Polyacrylsäure; Polyacrylamid; Polyvinylalkohol; Polyvinylsulfonsäuren; Styrolsulfonat; organischen Säuren; Polysacchariden; Phosphonaten; Polycarboxylaten; Verflüssigern; Fließmitteln; Luftporenbildnern; Verzögerern; Rheologiemodifizierern; Füllstoffen; Pigmenten; Bewehrungselementen; Selbstheilungsmitteln und Mischungen aus zwei oder mehr davon ist.

6. Verfahren gemäß einem der Ansprüche 1 bis 5, wobei die flüssige Phase Wasser ist und/oder als Teil des Ausgangsmaterials bereitgestellt wird und/oder die vom festen Material abgetrennte flüssige Phase in den Behälter zurückgeführt wird.

7. Verfahren gemäß einem der Ansprüche 1 bis 6, wobei Abgas als Kohlendioxid verwendet wird, bevorzugt Abgas aus Zementwerken, Kalkwerken, Kohlekraftwerken, Gaskraftwerken, Müllverbrennungsanlagen oder eine Mischung aus solchen Abgasen.

8. Verfahren gemäß einem der Ansprüche 1 bis 6, wobei eine Kohlendioxidlösung als Kohlendioxid verwendet wird, bevorzugt eine Lösung von Kohlendioxid in der flüssigen Phase oder die einen Teil der flüssigen Phase bildet.

9. Verfahren gemäß einem der Ansprüche 1 bis 8, wobei die Kohlendioxidkonzentration in der Flüssigkeit im Inneren des Behälters im Bereich von 0,1 bis 20 Gew.-% liegt, bevorzugt von 0,5 bis 10 Gew.-%, besonders bevorzugt von 1 bis 5 Gew.-%, am meisten bevorzugt die flüssige Phase Wasser und mit CO₂ gesättigt ist.

10. Verfahren gemäß einem der Ansprüche 1 bis 9, wobei die Temperatur auf einen Bereich von 30 bis 95 °C, bevorzugt auf 40 bis 95 °C, eingestellt wird.

11. Verfahren gemäß einem der Ansprüche 1 bis 10, wobei elektrische Impulse während der Elektroimpuls-Fragmentierung eine Anstiegszeit von ≤ 1 µsec. und/oder eine Spannung von ≥ 90 kV aufweisen.

12. Verfahren gemäß einem der Ansprüche 1 bis 11, wobei das fragmentierte feste Material von der flüssigen Phase durch Filtration oder Dekantieren, bevorzugt durch Filtration, abgetrennt wird.

13. Verfahren gemäß einem der Ansprüche 1 bis 12, wobei die abgezogene flüssige Phase, von der das feste Material abgetrennt wurde, in den Reaktionsbehälter zurückgeführt wird, gegebenenfalls nach Erhöhung ihrer Kohlendioxidkonzentration.

14. Verfahren zur Herstellung eines Kompositzements, umfassend die Bereitstellung von karbonatisiertem Recyclingzementstein erhältlich durch ein Verfahren gemäß einem der Ansprüche 1 bis 13 und Mischen des karbonatisierten Recyclingzementsteins mit einem hydraulischen Zement.

15. Verfahren gemäß Anspruch 14, wobei der Kompositzement den karbonatisierten Recyclingzementstein als Klinkerersatzmaterial umfasst und 95 bis 5 Gew.-% karbonatisierten Recyclingzementstein, bevorzugt 70 bis 10 Gew.-% karbonatisierten Recyclingzementstein, am meisten bevorzugt 50 bis 20 Gew.-% karbonatisierten Recyclingzementstein, umfasst; oder wobei der Kompositzement den karbonatisierten Recyclingzementstein als Füllstoff umfasst und 1 bis 60 Gew.-% karbonatisierten Recyclingzementstein, bevorzugt 5 bis 40 Gew.-% karbonatisierten Recyclingzementstein, am meisten bevorzugt 10 bis 20 Gew.-% karbonatisierten Recyclingzementstein, umfasst.

16. Verfahren gemäß Anspruch 14 oder 15, wobei der hydraulische Zement Portlandzement, Portlandkompositzement, Calciumsulfoaluminatzement, Calciumaluminatzement und/oder Dicalciumsilikat-Zement ist, bevorzugt ein Portlandzement nach DIN EN 197-1, Calciumsulfoaluminatzement oder Calciumaluminatzement, besonders bevorzugt ein Portlandzement nach DIN EN 197-1.

17. Verfahren gemäß einem der Ansprüche 14 bis 16, wobei während der Elektroimpuls-Fragmentierung des nassen Ausgangsmaterials die Kohlendioxidkonzentration und die Behandlungszeit so eingestellt werden, dass der karbonatisierte Recyclingzementstein einen Karbonatisierungsgrad von mindestens 50 Gew.-% aufweist.

18. Verfahren zur Herstellung eines Calciumcarbonatzements, umfassend die Bereitstellung von karbonatisiertem Recyclingzementstein durch ein Verfahren gemäß einem der Ansprüche 1 bis 13, wobei während der Elektroimpuls-Fragmentierung des nassen Ausgangsmaterials die Kohlendioxidkonzentration und die Behandlungszeit so eingestellt werden, dass der karbonatisierte Recyclingzementstein einen Karbonatisierungsgrad von mindestens 50 Gew.-% aufweist.

## Revendications

1. Procédé de fabrication de pâte de béton recyclé carbonatée et de granulat propre comprenant les étapes suivantes:
- la fourniture d'une charge d'alimentation comprenant des déchets de béton avec un D₁₀ ≥ 0,1 mm et un D₉₀ ≤ 100 mm
- le passage de la charge d'alimentation, d'un liquide contenant de l'eau et de dioxyde de carbone en une quantité fournissant une concentration d'au moins 0,1 % en poids de dioxyde de carbone dans le liquide dans un récipient de fragmentation, où la charge d'alimentation humide est soumise à une fragmentation par impulsions électriques,
- le retrait du matériau solide fragmenté du récipient de fragmentation,
- la séparation du matériau solide fragmenté de la phase liquide mélangée,
- la séparation du matériau solide fragmenté en une fraction fine avec une taille de particule maximale de 250 µm pour fournir la pâte de béton recyclé carbonatée et une fraction grossière,
- le recyclage de la fraction grossière dans le récipient de fragmentation et/ou le déchargement de la fraction grossière sous forme de granulat propre.

2. Procédé selon la revendication 1, dans lequel des déchets de démolition de béton, des résidus de béton provenant de la construction, du ciment partiellement durci lors d'un stockage trop long, des déchets provenant du nettoyage d'appareils utilisés pour le bétonnage, ou des mélanges de deux ou plus de ceux-ci sont utilisés comme déchets de béton, de préférence dans lequel la charge d'alimentation est constituée d'un ou plusieurs déchet(s) de béton.

3. Procédé selon la revendication 1 ou 2, dans lequel la charge d'alimentation est obtenue dans un concassage primaire ou secondaire de déchets de béton, de préférence par des technologies qui minimisent la production de fractions fines et/ou avec une distribution granulométrique ayant un D₉₀ de ≤ 50 mm, de préférence ≤ 32 mm, et/ou un D₁₀ ≥ 1 mm, de préférence ≥ 2 mm, déterminé par tamisage.

4. Procédé selon l'une des revendications 1 à 3, dans lequel la charge d'alimentation comprend un matériau supplémentaire qui accélère le processus de carbonatation et/ou améliore les propriétés finales de la pâte de béton recyclé carbonatée ou du ciment fabriqué avec cette dernière ou d'un matériau de construction fabriqué avec le ciment, de préférence également où la charge d'alimentation est constituée d'un ou plusieurs déchet(s) de béton.

5. Procédé selon l'une des revendications 1 à 4, dans lequel le matériau supplémentaire est un ou plusieurs parmi les alcanolamines, les halogénures, les substances qui améliorent la dissolution du CO₂ dans la solution, les enzymes, les acides aminés, les sels d'ammonium, les substances qui régulent le pH pendant la carbonatation, les substances fournissant des ions de métal alcalin, les sels de magnésium, l'acide polyacrylique, le polyacrylamide, l'alcool polyvinylique, les acides polyvinylsulfoniques, le styrènesulfonate, les acides organiques, les polysaccharides, les phosphonates, les polycarboxylates, les agents réducteurs d'eau, les plastifiants, les agents entraîneurs d'air, les retardateurs, les modificateurs de rhéologie, les charges, les pigments, les éléments de renforcement, les agents auto-cicatrisants et les mélanges de deux ou plus de ceux-ci.

6. Procédé selon l'une des revendications 1 à 5, dans lequel la phase liquide est de l'eau et/ou est fournie en tant que partie de la charge d'alimentation et/ou la phase liquide séparée du matériau solide est recyclée vers le récipient.

7. Procédé selon l'une des revendications 1 à 6, dans lequel du gaz d'échappement est utilisé comme dioxyde de carbone, de préférence du gaz d'échappement provenant de cimenteries, d'usines de chaux, de centrales électriques au charbon, de centrales électriques au gaz, d'incinérateurs de déchets, ou un mélange de tels gaz d'échappement.

8. Procédé selon l'une des revendications 1 à 6, dans lequel une solution de dioxyde de carbone est utilisé comme dioxyde de carbone, de préférence une solution de dioxyde de carbone dans la phase liquide ou constituant une partie de la phase liquide.

9. Procédé selon l'une des revendications 1 à 8, dans lequel la concentration de dioxyde de carbone dans le liquide à l'intérieur du récipient est comprise entre 0,1 et 20 % en poids, de préférence entre 0,5 et 10 % en poids, plus préférablement entre 1 et 5 % en poids, de manière préférée entre toutes la phase liquide est de l'eau et est saturée en CO₂.

10. Procédé selon l'une des revendications 1 à 9, dans lequel la température est réglée dans une plage de 30 à 95 °C, de préférence de 40 à 95 °C.

11. Procédé selon l'une des revendications 1 à 10, dans lequel les impulsions électriques lors de la fragmentation par impulsions électriques ont un temps de montée de ≤ 1 µs et/ou une tension de ≥ 90 kV.

12. Procédé selon l'une des revendications 1 à 11, dans lequel le matériau solide fragmenté est séparé de la phase liquide par filtration ou décantation, de préférence par filtration.

13. Procédé selon l'une des revendications 1 à 12, dans lequel la phase liquide soutirée de laquelle le matériau solide a été séparé est recyclée dans le récipient de réaction, éventuellement après augmentation de sa concentration en dioxyde de carbone.

14. Procédé de fabrication d'un ciment composite comprenant la fourniture d'une pâte de béton recyclé carbonatée par un procédé selon l'une des revendications 1 à 13 et le mélange de la pâte de béton recyclé carbonatée avec un ciment hydraulique.

15. Procédé selon la revendication 14, dans lequel le ciment composite comprend la pâte de béton recyclé carbonatée en tant que matériau cimentaire supplémentaire et comprend de 95 à 5 % en poids de pâte de béton recyclé carbonatée, de préférence de 70 à 10 % en poids de pâte de béton recyclé carbonatée, de manière préférée entre toutes de 50 à 20 % en poids de pâte de béton recyclé carbonatée ; ou dans lequel le ciment composite comprend la pâte de béton recyclé carbonatée comme charge et comprend de 1 à 60 % en poids de pâte de béton recyclé carbonatée, de préférence de 5 à 40 % en poids de pâte de béton recyclé carbonatée, de manière préférée entre toutes de 10 à 20 % en poids de pâte de béton recyclé carbonatée.

16. Procédé selon la revendication 14 ou 15, dans lequel le ciment hydraulique est du ciment Portland, du ciment Portland composite, du ciment de sulfoaluminate de calcium, du ciment d'aluminate de calcium et/ou du ciment de silicate dicalcique, de préférence un ciment Portland selon la norme DIN EN 197-1, du ciment de sulfoaluminate de calcium ou du ciment d'aluminate de calcium, de manière particulièrement préférée un ciment Portland selon la norme DIN EN 197-1.

17. Procédé selon l'une des revendications 14 à 16, dans lequel, lors de la soumission de la charge d'alimentation humide à la fragmentation par impulsions électriques, la concentration en dioxyde de carbone et le temps de traitement sont ajustés pour fournir à la pâte de béton recyclé carbonatée un degré de carbonatation d'au moins 50 % en poids.

18. Procédé de fabrication d'un ciment de carbonate de calcium comprenant la fourniture de pâte de béton recyclé carbonatée par un procédé selon l'une des revendications 1 à 13, dans lequel, lors de la soumission de la charge d'alimentation humide à la fragmentation par impulsions électriques, la concentration en dioxyde de carbone et le temps de traitement sont ajustés pour fournir la pâte de béton recyclé carbonatée avec un degré de carbonatation d'au moins 50 % en poids.
